# EUROPÄISCHE PATENTANMELDUNG

(11) **EP 1 337 022 A1**
(43) Veröffentlichungstag der Anmeldung: **20.08.2003**
(21) Anmeldenummer: 02405124.5
(22) Anmeldetag: 18.02.2002
(51) Int. Cl.: H02G 15/068, H02G 15/184

(54) **Hüllkörper für ein Hochspannungskabel und Kabelelement, welches mit einem solchen Hüllkörper versehen ist**

(71) Anmelder: ABB Schweiz AG, 5400 Baden (CH)
(72) Erfinder: Gramespacher, Hansjoerg, 5443 Niederrohrdorf (CH); Greuter, Felix, 5406 Rütihof (CH); Hagemeister, Michael, 8006 Zürich (CH)
(74) Vertreter: ABB Patent Attorneys

(57) **Zusammenfassung**

Der Hüllkörper (1) dient dem Umhüllen des Endes, einer Abzweigung oder einer Verbindungsstelle eines Hochspannungskabels. Er weist ein nichtlineares Feldsteuerungselement (3) auf der Basis eines Polymers und eines in das Polymer eingebetteten und Mikrovaristoren enthaltenden Füllstoffs auf. Das Feldsteuerungselement (3) enthält mindestens einen längs einer Achse (2) erstreckten Hohlkörperabschnitt, dessen Innenabmessung nach dem Aufbringen des Hüllkörpers (1) auf das Kabel verändert ist. Um eine gute Feldsteuerung auch bei Kabeln zu gewährleisten, die mit hohen Spannungen betrieben werden, ist der Hohlkörperabschnitt elastisch verformbar ausgebildet und ist nach dem Aufbringen des Hüllkörpers (1) auf das Kabel die Innenabmessung des Hohlkörperabschnitts in Abhängigkeit von der Lage auf der Achse (2) infolge Dehnung des Hohlkörperabschnitts unterschiedlich verändert.

## Beschreibung

### TECHNISCHES GEBIET

Bei der Erfindung wird ausgegangen von einem Körper zum Umhüllen des Endes, einer Abzweigung oder einer Verbindungsstelle eines Hochspannungskabels nach dem Oberbegriff von Patentanspruch 1. Die Erfindung betrifft auch ein mit einem solchen Hüllkörper versehenes Kabelelement, insbesondere einen Kabelendverschluss oder eine Kabelmuffe.

Der Hüllkörper enthält mindestens ein Feldsteuerungselement auf der Basis eines Polymers und eines in das Polymer eingebetteten und Mikrovaristoren enthaltenden Füllstoffs. Das Feldsteuerungselement zeichnet sich durch eine nichtlineare Strom-Spannungs-Kennlinie aus und weist mindestens einen rotationssymmetrisch ausgebildeten Hohlkörperabschnitt auf, dessen Innendurchmesser nach dem Aufbringen des Hüllkörpers auf das Kabel verändert ist.

Grundsätzlich kann der Hüllkörper zwei Klassen von Hüllkörpern zugeordnet werden. Die der einen Klasse zugeordneten Hüllkörper enthalten als Feldsteuerungselement elektrisch leitfähige - in der Regel mit Russ gefüllte - Elastomere. Bei diesen Elastomeren wird die feldsteuernde Wirkung durch die geometrische Formgebung, wie z.B. einer trichterförmigen Öffnung, erzielt. Diese Art der Feldsteuerung wird als geometrische Feldsteuerung bezeichnet. Die der anderen Klasse zugeordneten Hüllkörper enthalten als Feldsteuerungselement Polymere, in die Füllstoffe mit feldsteuernden Eigenschaften eingebettet sind. Diese feldsteuernden Materialeigenschaften können z.B. durch relative hohe Dielektrizitätszahlen oder durch nichtlineare, d.h. feldstärkeabhängige, elektrische Widerstände oder durch eine Kombination von beidem erzielt werden. Diese Art von Feldsteuerungselementen besitzen den Vorteil, dass sie aus dünnwandigen, zylinderförmigen Röhren oder Schläuchen bestehen können und man so in der Lage ist, dünne, platzsparende und somit auch kostengünstige Produkte herzustellen.

### STAND DER TECHNIK

Ein Hüllelement der eingangs genannten Art, welches bei der Herstellung eines Endverschlusses eines geschirmten kunststoffisolierten Einleiterkabels mit Betriebsspannungen von 10 kV bzw. 20 kV verwendet wird, ist in EP 0 875 087 B1 beschrieben. Zur Herstellung eines Kabelendverschlusses eines 20 kV-Kabels werden an einem Kabelende zunächst Drähte einer Kabelabschirmung von einer zwischen einem Kabelleiter und der Abschirmung vorgesehenen Kabelisolation abgehoben und unter Bildung eines Drahtbundes festgesetzt. Eine auf der Kabelisolation befindliche leitfähige Schicht, z.B. eine Graphitbeschichtung, wird bis zu einer über den Drahtbund vorstehenden Absetzkante abgetragen. Sodann wird die am Ende des Kabelleiters vorgesehene Kabelisolierung entfernt und ein feldsteuerndes, rohrförmig ausgebildetes Hüllelement auf das Kabelende aufgebracht. Dieses Hüllelement ist gebildet von einem Feldsteuerungselement aus einem Polymer und einem Mikrovaristoren auf der Basis von dotiertem Zinkoxid enthaltendem Füllstoff sowie von einer das Feldsteuerungselement koaxial umgebenden Aussenschicht aus einem wärmeschrumpfbaren Isoliermaterial. Das Feldsteuerungselement kontaktiert mit seinem einen Ende das bis an die Absetzkante geführte Ende der leitfähigen Schicht. Das andere Ende des Feldsteuerungselements ist über die Absetzkante hinweg auf die Kabelisolation geführt und kann je nach Steuerungsaufgabe mit dem offenliegenden Ende des Kabelleiters verbunden sein oder aber auch ohne Verbindung mit dem Kabelleiter auf der Kabelisolation enden.

Aufbau und Eigenschaften eines im vorgenannten Hüllelements verwendeteten Feldsteuerungselement sind ausführlich in einer Veröffentlichung von R. Strümpler et al. "Smart Varistor Composites" Proceedings of the 8^{th} CIMTEC Ceramic Congress and Forum on Materials Symposium (1994) beschrieben. Das Feldsteuerelement ist als Verbundwerkstoff ausgebildet und ist mit einem keramischen Material gefüllt, das aus kleinen - im wesentlichen kugelförmigen- ZnO Teilchen besteht. Die ZnO Teilchen sind mit verschiedenen Metalloxiden, wie z.B. Sb₂O₃, Bi₂O₃, Cr₂O₃ und Co₃O₄ dotiert und werden bei Temperaturen zwischen 900 °C und 1300 °C gesintert. Die gesinterten Teilchen besitzen wie ein Varistor nichtlineare, von der elektrischen Feldstärke abhängige, elektrische Eigenschaften. Bei kleinen Feldstärken verhalten sich die Teilchen wie ein Isolator und mit zunehmender Feldstärke werden die Teilchen leitfähiger. Aufgrund dieser nichtlinearen elektrischen Eigenschaften weist der polymere Verbundwerkstoff gute Feldsteuerungseigenschaften auf.

### DARSTELLUNG DER ERFINDUNG

Der Erfindung, wie sie in den Patentansprüchen angegeben ist, liegt die Aufgabe zugrunde, einen Hüllkörper der eingangs genannten Art zu schaffen, welcher in besonders einfacher Weise eine sehr genaue Feldsteuerung eines Kabelelements, wie insbesondere eines Kabelendverschlusses oder einer Kabelmuffe, ermöglicht.

Beim erfindungsgemässen Hüllkörper weist das Feldsteuerungselement einen elastisch verformbaren Hohlkörperabschnitt auf, dessen Innenabmessung nach dem Aufbringen des Hüllkörpers auf das Kabel in Abhängigkeit von der Lage auf der Achse infolge Dehnung des Hohlkörperabschnitts unterschiedlich verändert ist. Die elektrischen Eigenschaften des Feldsteuerungselements hängen wesentlich vom gegenseitigen Abstand der Mikrovaristoren in der polymeren Matrix bzw. dem Anteil an Mikrovaristoren ab. So nimmt z. B. die Dielektrizitätszahl mit zunehmender Konzentration an Mikrovaristoren, insbesondere solcher auf der Basis einer Keramik, wie etwa ZnO, zu und sinkt umgekehrt der elektrische Widerstand im allgemeinen bei gegebener Feldstärke mit zunehmender Füllstoffkonzentration. Wird nun das Feldsteuerungselement bei der Herstellung eines Kabelelementes, beispielsweise eines Kabelendverschlusses oder einer Kabelmuffe, gedehnt, so verändern sich mit der Dehnung, die gegenseitigen Abstände der Mikrovaristoren und damit die elektrischen Eigenschaften des Feldsteuerungselements. Diese Tatsache macht sich das erfindungsgemässe Hüllelement in vorteilhafter Weise zunutze, um durch unterschiedliche Dehnungen des Hohlkörperabschnitts längs der Achse lokal unterschiedliche elektrische Eigenschaften, wie insbesondere Dielektrizitätszahl und elektrischer Widerstand, zu erzeugen. Man erhält so neben den auf das Material der Mikrovaristoren bezogenen Parametern, wie z. B. Füllstoffgehalt, Zusammensetzung, Sinterbedingungen sowie geometrische Abmessungen, durch die Festlegung der Dehnungsverhältnisse längs des Hohlkörperabschnitts des Feldsteuerungselements einen zusätzlichen Design-Parameter, um die Feldsteuerungseigenschaften in dem mit dem erfindungsgemässen Hüllkörper versehenen Kabelelement zu optimieren. Daher kann das erfindungsgemässe Hüllelement auch in Kabeln im Spannungsbereich von weit über 100 kV verwendet werden.

Zugleich weisen das Feldsteuerelement und damit auch der Hüllkörper eine geringe Wanddicke auf. Daher zeichnet sich ein mit dem erfindungsgemässen Hüllkörper versehenes und für Hochspannungsanwendungen vorgesehenes Kabelelement trotz optimierter elektrischer Eigenschaften durch ein schlankes Design aus. Hieraus ergeben sich zusätzlich weitere Vorteile, wie etwa:
a) Geringerer Platzbedarf. Dies ist besonders bei Anschlüssen in gasisolierten Hochspannungsanlagen (GIS-Anlage) bedeutsam, da mit dünneren Kabelelementen, wie etwa Endverschlüssen, auch geringere Rohrdurchmesser in der GIS-Anlage möglich werden.
(b) Geringerer Materialbedarf. Bei dünneren Feldsteuerelementen werden auch dünnere Kabelelemente für Aussenanwendungen möglich. Da aufgrund der Länge bei Aussenanwendungen heute oft sehr viel Isolationsmaterial benötigt wird, kann mit dünneren Kabeleelementen, Material eingespart und der Montageaufwand kann geringer gehalten werden.
(c) Grösserer Anwendungsbereich bei verschiedenen Kabeldurchmessern. Da bei dünneren Kabelelementen die zum Aufschieben auf ein Kabel benötigten Kräfte im allgemeinen geringer sind als bei Kabelelementen mit geometrischer Feldsteuerung, können diese Kabelelemente so dimensioniert werden, dass eine Grösse für mehrere Kabeldurchmesser eingesetzt werden kann.

Vor dem Aufbringen des Hüllkörpers auf das Kabel kann sich die Innenabmessung des Hohlkörperabschnitts längs der Achse stetig ändern. Beim Aufziehen des Hüllkörpers auf einen als Zylinder oder Flachband ausgebildeten Abschnitt des Kabels wird so die für die erwünschten elektrischen Eigenschaften des Feldsteuerelements angestrebte Dehnung erreicht.

Grundsätzlich ist es jedoch auch möglich, dass vor dem Aufbringen des Hüllkörpers auf das Kabel die Innenabmessung längs der Achse konstant gehalten ist. Die für die erwünschten elektrischen Eigenschaften des Feldsteuerelements angestrebte Dehnung wird dann durch eine diese Dehnung bewirkende Ausbildung der Mantelfläche des Kabels bzw. der Kabelisolation erreicht.

Ist der Hohlkörperabschnitt des Feldsteuerungselements rotationssymmetrisch und weist er eine durch einen Innendurchmesser bestimmte Innenabmessung auf, welche längs der Rotationsachse monoton variiert, so ist die Innenfläche des erfindungsgemässen Hüllkörpers überwiegend konisch ausgebildet. Wird der Hüllkörper in einem Giessverfahren hergestellt, so kann ein hierbei verwendeter Giesskern dann verhältnismässig einfach abgezogen werden.

Zur Lösung einfacher Feldsteueraufgaben ist es ausreichend, wenn sich der Innendurchmesser des Hohlkörperabschnitts längs der Rotationsachse linear verändert. Hierbei, aber auch bei der Lösung komplizierterer Feldsteueraufgaben sollte das Verhältnis des minimalen Innendurchmessers zum maximalen Innendurchmesser des Hohlkörperabschnitts zweckmässigerweise das 0,2- bis 1,0-fache betragen.

Eine zusätzliche Verbesserung der Feldsteuerung durch Veränderung des elektrischen Widerstands bzw. der Impedanz wird dadurch erreicht, dass sich neben der Innenabmessung auch die Wandstärke des Hohlkörperabschnitts längs der Achse ändert. Beispielsweise verringert sich mit abnehmender Wanddicke auch die Querschnittsfläche und erhöht sich damit der Widerstand parallel zur Achse. Die Wandstärke kann aber auch in gewissen Bereichen, vorzugsweise dort, wo eine höhere elektrische Leitfähigkeit gewünscht wird - beispielsweise direkt an der Absetzkante - entsprechend gross bemessen sein.

In fertigungtechnisch einfacher Weise kann das Feldsteuerungselement in eine Innenfläche eines elastisch verformbaren Tragkörpers aus Isoliermaterial eingeformt sein.

Anstelle nur eines in den Tragkörper eingeformten ersten Feldsteuerungselements kann mindestens ein weiteres Feldsteuerungselement in den Tragkörper eingeformt sein. Zur Erzielung einer guten Feldsteuerung auch bei hohen Spannungen, beispielsweise bei Spannungen über 100 kV, sollte das weitere Feldsteuerungselement das erste Feldsteuerungselement umgeben und von diesem durch eine elektrisch isolierende Zwischenschicht getrennt sein.

Besonders geeignet als Material für das erste Feldsteuerungselement und das gegebenenfalls vorgesehene weitere Feldsteuerungselement sind Polymere, in die als Mikrovaristoren durch Sintern von metalloxiddotiertem Zinkoxidgranulat gebildete, vorwiegend kugelförmige Partikel eingebettet sind. Die Mikrovaristoren können auch Mikrovaristoren auf der Basis von dotiertem SnO₂, TiO₂, SrTiO₃ oder SiC jeweils allein oder in Mischung umfassen. Durch unterschiedliche Füllstoffkonzentrationen, Füllstoffwahl und/oder Sinterbedingungen können die elektrischen Eigenschaften der Feldsteuerungselemente erheblich verändert werden. Dadurch und durch Wahl von mindestens zwei Feldsteuerungselementen, welche unterschiedliche elektrische Eigenschaften und/oder Abmessungen aufweisen, kann so der erfindungsgemässe Hüllkörper eine Vielzahl von Feldsteueraufgaben mit besonders grosser Genauigkeit lösen.

Es empfiehlt sich, neben den Mikrovaristoren als Füllstoff auch elektrisch leitfähige Partikel in das Polymer einzubetten, da so zum einen eine hohe Energieaufnahme eines mit dem Hüllelement versehenen Kabelelements, beispielsweise eines Kabelendverschlusses, sichergestellt ist, und da zum anderen durch die vorzugsweise als Metallschuppen oder Graphit ausgebildeten Partikel die Dielektrizitätszahl des Feldsteuerungselements in einer zur Lösung bestimmter Feldsteueraufgaben besonders vorteilhaften Weise erhöht wird. Um eine hohe Energieaufnahme und eine wirksame Erhöhung der Dielektrizitätszahl zu erreichen, sollten die im Füllstoff vorgesehenen, elektrisch leitfähigen Teilchen ca. 0,05 bis ca. 5 Volumenprozent des Füllstoffes ausmachen. Diese können auch direkt auf den Mikrovaristoren angebracht sein, um so die Herstellung des Hüllkörpers zu vereinfachen.

Bei einem vorzugsweise als Kabelendverschluss oder Kabelmuffe ausgeführten Kabelelement mit einem Kabelabschnitt, welcher einen auf Hochspannungspotential führbaren Kabelleiter, eine elektrisch leitfähige Kabelschirmung und eine zwischen Kabelleiter und Kabelschirmung angeordnete Kabelisolierung umfasst, und mit einem auf dem Kabelabschnitt angebrachten erfindungsgemässen Hüllkörper versehen ist, kann eine gute Feldsteuerung erreicht werden, wenn einer der Innendurchmesser des Feldsteuerungselements in einem eine Absetzkante der Kabelschirmung und einen ungeschirmten Bereich der Kabelisolierung umschliessenden ersten Abschnitt stärker gedehnt ist als in einem sich daran anschliessenden und einen geschirmten Bereich der Kabelisolierung umfassenden zweiten Abschnitt. Um eine für Spannungen im Bereich einiger 10 kV bis zu einigen 100 kV und insbesondere für Gleichstromanwendungen besonders gute Feldsteuerung zu ereichen, sollte das Feldsteuerungselement die Kabelschirmung und den Kabelleiter miteinander verbinden.

Bei höheren Spannungen wird eine besonders gute Feldsteuerung erreicht, wenn das Feldsteuerungselement und ein zusätzlich vorgesehenes äusseres Feldsteuerungselement, welches das andere Feldsteuerungselement koaxial umgibt, in axialer Richtung über die Absetzkante der Kabelschirmung geführt und lediglich mit der Kabelschirmung verbunden sind. Diese vorteilhafte Wirkung wird auch erzielt, wenn das äussere Feldsteuerungselement auf floatendem Potential gehalten wird. Für gewisse Anwendungen, insbesondere bei Hochspannungsanwendungen, kann es von Vorteil sein, wenn ein weiteres äusseres Feldsteuerelement direkt mit dem auf Hochspannungspotential liegenden Leiter verbunden ist.

Die vorstehend beschriebe Wirkung kann noch ganz erheblich verbessert werden, wenn zwischen den beiden Feldsteuerungselement zusätzlich eine elektrisch leitende Schicht angeordnet ist, welche mit dem äusseren Feldsteuerungselement elektrisch leitend verbunden ist.

Aus Gründen einer reproduzierbaren Herstellung eines dielektrisch hochwertigen Kabelelements empfiehlt es sich, auf der Innenfläche des Hohlkörperabschnitts des inneren Feldsteuerungselements eine ringförmig ausgebildete Schicht aus elektrisch leitfähigem Material aufzubringen, welche sich in Richtung der Rotationsachse über die Absetzkante erstreckt. Durch diese Massnahmen wird eine Entlastung des dielektrisch kritischen Bereichs um die Absetzkante erreicht. Dies ist insofern von Vorteil, als diese ringförmig ausgebildete Schicht im Unterschied zur Absetzkante nicht am Montageort, sondern in einer Fertigungsstätte hergestellt wird und daher dielektrisch besonders hochwertig ausgeführt ist.

### KURZE BESCHREIBUNG DER ZEICHNUNGEN

Anhand von Zeichnungen werden Ausführungsbeispiele der Erfindung erläutert. Hierbei zeigt:
- Fig.1: eine Aufsicht auf einen axial geführten Schnitt durch eine erste Ausführungsform eines rotationssymmetrisch ausgeführten Hüllkörpers nach der Erfindung,
- Fig.2: eine Aufsicht auf einen axial geführten Schnitt durch einen mit dem Hüllkörper gemäss Fig.1 versehenen Kabelendverschluss,
- Fig.3: eine Aufsicht auf einen axial geführten Schnitt durch eine zweite Ausführungsform eines rotationssymmetrisch ausgeführten Hüllkörpers nach der Erfindung, und
- Fig.4: eine Aufsicht auf einen axial geführten Schnitt durch einen mit einer dritten Ausführungsform des Hüllkörpers nach der Erfindung versehenen, rotationssymmetrisch ausgeführten Kabelendverschluss.

### WEGE ZUR AUSFÜHRUNG DER ERFINDUNG

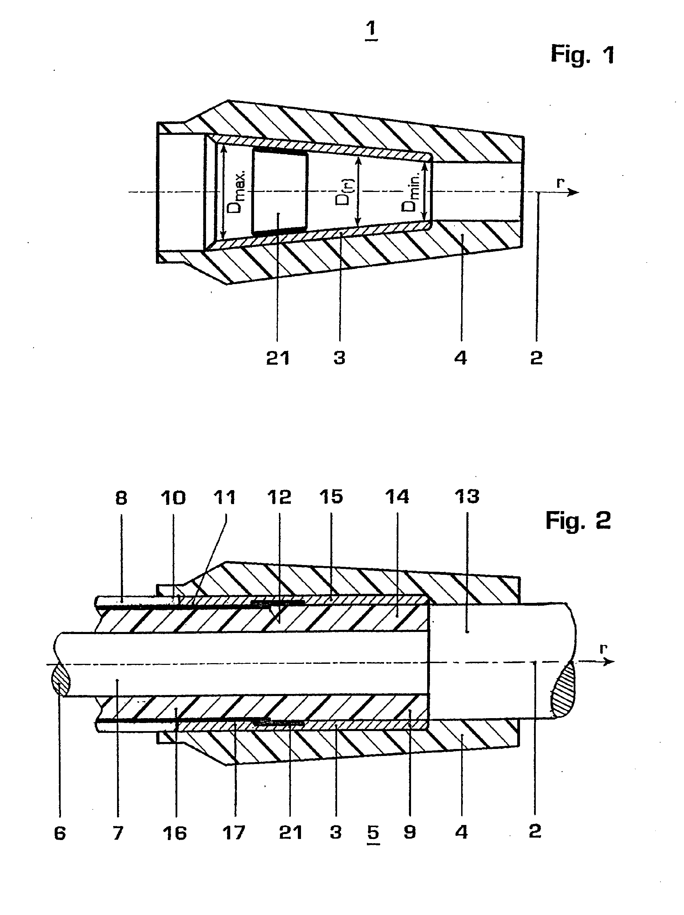

In allen Figuren beziehen sich gleiche Bezugszeichen auch auf gleichwirkende Teile. Ein in Fig.1 dargestellter hohler Hüllkörper 1 ist rotationssymmetrisch ausgeführt und weist ein im wesentlichen als hohler Kegelstumpf ausgebildetes und längs einer Rotationsachse 2 in Richtung einer Koordinate r erstrecktes Feldsteuerungselement 3 aus einem elastomeren, nichtlineare elektrische Eigenschaften aufweisendem Material auf. Das Material enthält neben dem Elastomer auch in das Elastomer als Matrix eingebettete Mikrovaristoren, welche mit Vorteil von dotierten und gesinterten Zinkoxidteilchen gebildet sind. Typische Zusammensetzungen, Teilchengrössen und Sinterbedingungen sind dem eingangs genannten Stand der Technik entnehmbar. Das Feldsteuerungselement 3 ist in eine Innenfläche eines ebenfalls elastomeren, jedoch aus einem isolierenden Material bestehenden hohlen Tragkörpers 4 eingeformt. Als Elastomer können z.B. Silikone, EPDM, Naturkautschuk, Nitrilkautschuk, thermoplastische Elastomere oder Mischungen von verschiedenen Elastomeren verwendet werden. Der Innendurchmesser D(r) des Feldsteuerelements nimmt längs der Rotationsachse 2 in Richtung wachsender Koordinate r ab. Daher wird das elastomere Feldsteuerelement beim Aufschieben auf ein Kabelende längs der Rotationsachse 2 unterschiedlich gedehnt und die elektrischen Eigenschaften des aufgeschobenen Feldsteuerelements 3 sind dann von der Position auf dem Kabel abhängig.

Dies ist aus Fig. 2 ersichtlich. In dieser Figur ist ein Kabelendverschluss 5 für ein Betriebsspannungen von einigen 10 kV führendes Kabel dargestellt. Das Kabel weist einen Kabelabschnitt 6 auf mit einem die Spannung führenden Kabelleiter 7, einer elektrisch leitfähigen Kabelschirmung 8 und einer zwischen Kabelleiter 7 und Kabelschirmung 8 angeordnete Kabelisolation 9. Die Kabelschirmung 8 enthält Drähte, welche von der Kabelisolation 9 abgehoben und unter Bildung eines Drahtbundes 10 am rechten Ende der Kabelschirmung festgesetzt sind. Eine auf der Kabelisolation 9 vorgesehene, elektrisch leitende Beschichtung 11 ist bis zu einer über den Drahtbund 10 vorstehenden Absetzkante 12 abgetragen. Der Kabelleiter 7 trägt an seinem Ende einen Kabelschuh 13. Auf eine von der Kabelschirmung 8, der Beschichtung 11, einem ungeschirmten Bereich 14 der Kabelisolation 9 und dem Kabelschuh 13 gebildeten Mantelfläche ist der Hüllkörper 1 aufgebracht und zwar derart, dass das Feldsteuerungselement 3 die Beschichtung 11 über die Absetzkante 12 hinweg mit dem auf dem Potential des Kabelleiters 7 befindlichen Kabelschuh 13 verbindet und der Tragkörper 4 den Kabelabschnitt 6 flüssigkeitsdicht abschliesst. Ersichtlich ist der Innendurchmesser des Feldsteuerungselements 3 in einem die Absetzkante 12 und den ungeschirmten Bereich 14 der Kabelisolation 9 umschliessenden Abschnitt 15 stärker gedehnt ist als in einem sich daran anschliessenden und einen geschirmten Bereich 16 der Kabelisolation umfassenden Abschnitt 17.

Bei der Ausführungsform nach den Figuren 1 und 2 ist der Innendurchmesser D(r) das Feldsteuerelements 3 nach der Fertigstellung des Kabelendverschlusses längs der Rotationsachse 2 linear gedehnt. Die Änderung des Durchmessers kann aber eine beliebig andere Form aufweisen und muss auch nicht über die gesamte Länge des hohl ausgebildeten Feldsteuerungselements 3 gehen, sondern gegebenenfalls lediglich über einen vorgegebenen Abschnitt. Wird der maximale Innendurchmesser dieses Hohlkörperabschnitts mit Dₘₐₓ und der minimale Innendurchmesser mit Dₘᵢₙ (Fig. 1) bezeichnet, so kann das Verhältnis Dₘᵢₙ/Dₘₐₓ bei einem gegebenen Endverschluss zwischen 0,2 und 1 liegen. Die Dehnung des Feldsteuerungselementes 3 an der Stelle mit dem minimalen Innendurchmesser Dₘᵢₙ kann nach der Installation auf dem Kabel zwischen 2 % und 80 % betragen. Dementsprechend haben sich der elektrische Widerstand und die Dielektrizitätszahl des Feldsteuerungselements 3 an dieser Stelle gegenüber dem Widerstand und der Dielektrizitätszahl an der Stelle mit dem maximalen Innendurchmesser Dₘₐₓ verändert. Diese Veränderungen von Widerstand und Dielektrizitätszahl begünstigen die Feldsteuerung des Kabelenverschlusses beträchtlich.

Aus der Fig.2 ist zu ersehen, dass das Feldsteuerungselement 3 eine durchgehende Verbindung darstellt, so dass Erdpotential und Hochspannungspotential verbunden sind. Dies ist zur Lösung bestimmter Steueraufgaben, insbesondere im Spannungsbereich von bis zu einigen 10 kV und bei Gleichstromanwendungen, vorteilhaft. Grundsätzlich kann das Feldsteuerungselement 3 aber auch an einem seiner beiden Enden potentialfrei gehalten sein.

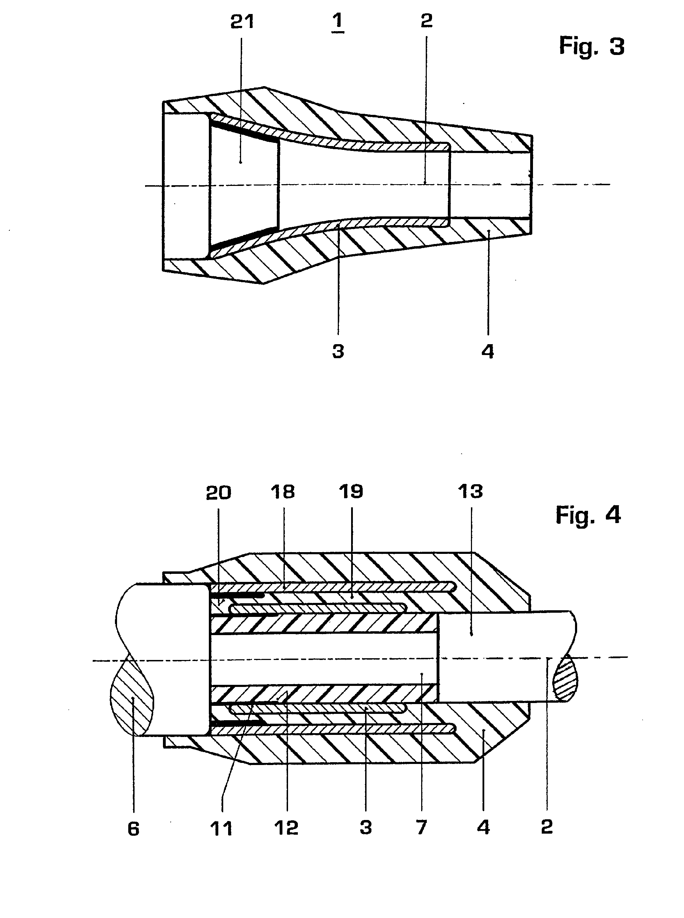

Eine weitere Möglichkeit, den elektrischen Widerstand bzw. die Impedanz eines Kabelelementes, wie etwa des Kabelendverschlusses, längs der Rotationsachse 2 zu variieren, besteht in einer Veränderung der Wanddicke des Feldsteuerungselementes 3. Mit zunehmender Wanddicke erhöht sich die Querschnittsfläche, d.h. der Widerstand parallel zur Rotationsachse verringert sich. In der Fig. 3 ist eine zweite Ausführungsform des Hüllkörpers 1 nach der Erfindung zur Verwendung in einem Kabelendverschluss dargestellt, bei dem die feldsteuernden, nichtlinearen elektrischen Eigenschaften durch die Änderung der Dehnung und die Änderung des Querschnittes längs der Rotationsachse zusätzlich beeinflusst werden. Für die Lösung von Feldsteueraufgaben, bei denen relativ starke Feldgradienten auftreten, wie etwa in Kabeln mit Betriebsspannungen von mehr als 100kV, sind derart ausgeführte feldsteuernde Hüllkörper besonders geeignet.

Eine weitere Möglichkeit der Optimierung der Feldsteuerung bei Kabelendverschlüssen oder Kabelmuffen besteht in der Verwendung von zwei koaxial übereinander angeordneten Feldsteuerungselementen aus elastomerem Material, welches Mikrovaristoren enthält. Hierbei können die Feldsteuerungselemente 3, 18 gegebenenfalls direkt übereinanderliegen, sind im allgemeinen aber - wie in einer dritten Ausführungsform des Hüllkörpers nach der Erfindung in Figur 4 dargestellt ist - durch eine Isolationsschicht 19 voneinander getrennt. Die Feldsteuerungselemente 3, 18 können unterschiedliche Längen besitzen und in der Längsrichtung versetzt sein, so dass z. B. das aussenliegende Feldsteuerungselement 18 über das innenliegende 3 hinausragt. Zwischen dem Feldsteuerungselement 18 und der isolierenden Zwischenschicht 19 kann zusätzlich eine Schicht 20 aus elektrisch leitfähigem Material angeordnet sein. Diese Schicht ist mit Vorteil von einem elektrisch leitfähigen Elastomer oder von einem leitfähigen Lack gebildet. Diese Schicht 20 ist entweder in elektrisch isolierender Weise in eine die beiden Feldsteuerungselemente 3, 18 voneinander trennende Isolationsschicht 19 eingebettet oder ist mit dem Feldsteuerungselement 18 elektrisch leitend verbunden und weist wegen ihrer kapazitiven Wirkung eine gute Feldsteuerungsfunktion auf. Die beiden Feldsteuerungselemente 3 und 18 müssen nicht notwendigerweise die gleichen elektrischen Eigenschaften aufweisen. Bedingt durch unterschiedliche Füllstoffgehalte sowie durch unterschiedliche Zusammensetzung und Sinterbedingungen der im Füllstoff vorgesehenen Mikrovaristoren können sich die elektrischen Eigenschaften beider Feldsteuerungselemente ganz wesentlich unterscheiden.

Um den Ort der höchsten elektrischen Beanspruchung von der Absetzkante 12 der leitfähigen Schicht 11 auf dem Kabel zu trennen, empfiehlt es sich, auf der Innenseite des Feldsteuerungselements 3 eine ringförmig ausbildete, leitfähige Schicht 21 aufzubringen oder in das feldsteuernde Material zu integrieren. Durch diese Schicht wird erreicht, dass das Gebiet der höchsten elektrischen Beanspruchung nicht mit der Absetzkante 12 zusammenfällt, sondern - je nach Länge der leitfähigen Schicht 21 - zum Ende des Kabels hin verschoben wird.

Die Herstellung des erfindungsgemässen Hüllkörpers kann mit den heute in der Elastomercompoundierung verwendeten Verarbeitungsmaschinen erfolgen. So kann z. B. bei der Verwendung von einem LSR Silikon als Polymermatrix das dotierte und gesinterte ZnO-Pulver mit einem Rührwerk eingearbeitet werden. Bei der Verwendung von einem EPDM oder einem Festsilikon kann die Einarbeitung des Füllstoffs in die Elastomermatrix mit Hilfe eines Walzwerkes erfolgen.

Vorteilhaft für die Montage und Anwendung des erfindungsgemässen Hüllkörpers ist es im allgemeinen, wenn die Feldsteuerungselemente 3, 18 und das Isolationsmaterial des Tragkörpers 4 zusammen gefertigt werden und bei der Montage des als Kabelendverschluss 5 ausgebildeten Kabelelements als ein Teil über das Kabelende gezogen werden können. Die Herstellung eines solchen Hüllkörpers 1 kann mit den heute üblichen Produktionsmethoden in der Kunststoffverarbeitung, z. B. dem Spritzgussprozess, erfolgen. Ein Vorteil hierbei ist, dass man eine gute Haftung der verschiedenen Materialien (Feldsteuerungselement 3, 18, Tragkörper 4, leitfähige Zwischenschichten 20, 21) untereinander durch den Produktionsprozess (Druck, Temperatur, Vulkanisationszeit und Verwendung von Haftvermittlern) einstellen kann und damit eine gute dielektrische Festigkeit der elektrisch hoch beanspruchten Grenzflächen erzielen kann. Ausserdem ist so ausgeschlossen, dass eine Verschmutzung der Grenzflächen bei der Montage der Kabelelemente auftritt.

Die Herstellung des Hüllkörpers 1 gemäss Fig.1 kann wie folgt ausgeführt werden: Ein mit Oxiden von typischerweise Bi, Co, Cr, Mn und Sb und wahlweise weiteren Elementen, wie etwa Al, B, Fe, Ni, Si, dotiertes ZnO-Granulat wird bei Temperaturen zwischen 900 °C und 1300 °C gesintert. Der Sinterprozess kann z.B. in einem Drehrohrofen oder in einem konventionellen Batch-Ofen erfolgen. Nach dem Sintern kann das gebildet Mikrovaristor-Pulver auf eine gewünschte Teilchengrössenfraktion von beispielsweise 100 µ gesiebt werden. Wahlweise können anschliessend metallische Zusatzfüllstoffe eingemischt und an die Mikrovaristoren angesintert werden. Das gesiebte Pulver wird z. B. auf einem Walzwerk in ein Elastomer (z. B. in ein HTV Silikon) eingearbeitet. Je nach Elastomertyp können hier weitere Additive (wie z. B. Vernetzungshilfsmittel, Stabilisatoren) zugegeben werden. Der Volumenanteil des gesinterten Pulvers in dem Feldsteuermaterial beträgt typischerweise zwischen 20 und 45 Prozent. Das so hergestellte Compound kann nun mit einem konventionellen Spritzgussverfahren oder einem Pressverfahren in die gewünschte Form gefüllt und das Elastomer in der Form vernetzt werden. Das so gebildete vernetzte Feldsteuerelement 3 wird in einem zweiten Spritzgussprozess oder Giessverfahren mit dem Isoliermaterial (z. B. Flüssigsilikonkautschuk) unter Bildung des Hüllkörpers 1 umgossen.

Eine für Aussenanwendungen notwendigen Beschirmung des Kabelendverschlusses kann direkt mit dem Tragkörper 4 vergossen werden, kann alternativ aber auch in einem getrennten Herstellungsprozess gegossen und nachfolgend auf den Kabelendverschluss aufgeschoben werden. Die Vorteile der getrennt hergestellten Schirme liegen in einer grösseren Flexibilität bei verschiedene Anwendungen (z. B. bei verschiedenen Verschmutzungsgraden der Umgebung) und damit kostengünstigeren Produktionsmethoden.

### Bezugszeichenliste

- 1: Hüllkörper
- 2: Rotationsachse
- 3: Feldsteuerungselement
- 4: Tragkörper
- 5: Kabelendverschluss
- 6: Kabelabschnitt
- 7: Kabelleiter
- 8: Kabelschirmung
- 9: Kabelisolation
- 10: Drahtbund
- 11: Beschichtung
- 12: Absetzkante
- 13: Kabelschuh
- 14, 16: Bereiche
- 15, 17: Abschnitte
- 18: Feldsteuerungselement
- 19: Isolationsschicht
- 20, 21: leitfähige Schichten

## Patentansprüche

1. Körper (1) zum Umhüllen des Endes, einer Abzweigung oder einer Verbindungsstelle eines Hochspannungskabels mit einem eine nichtlineare Strom-Spannungs-Kennlinie aufweisenden ersten Feldsteuerungselement (3) auf der Basis eines Polymers und eines in das Polymer eingebetteten und Mikrovaristoren enthaltenden Füllstoffs, welches Feldsteuerungselement (3) mindestens einen längs einer Achse (2) erstreckten Hohlkörperabschnitt aufweist, dessen Innenabmessung nach dem Aufbringen des Hüllkörpers (1) auf das Kabel verändert ist, **dadurch gekennzeichnet, dass** der Hohlkörperabschnitt elastisch verformbar ausgebildet ist, und dass nach dem Aufbringen des Hüllkörpers (1) auf das Kabel die Innenabmessung des Hohlkörperabschnitts in Abhängigkeit von der Lage auf der Achse (2) infolge Dehnung des Hohlkörperabschnitts unterschiedlich verändert ist.

2. Hüllkörper nach Anspruch 1, **dadurch gekennzeichnet, dass** vor dem Aufbringen des Hüllkörpers (1) auf das Kabel die Innenabmessung des Hohlkörperabschnitts sich längs der Achse (2) stetig, vorzugsweise monoton, insbesondere linear, ändert.

3. Hüllkörper nach einem der Ansprüche 1 oder 2, **dadurch gekennzeichnet, dass** der Hohlkörperabschnitt des Feldsteuerungselements (3) rotationssymmetrisch ausgebildet ist und eine durch einen Innendurchmesser (D(r)) bestimmte Innenabmessung aufweist.

4. Hüllkörper nach einem der Ansprüche 1 bis 3, **dadurch gekennzeichnet, dass** das Verhältnis des minimalen Innendurchmessers (Dₘᵢₙ) zum maximalen Innendurchmesser (Dₘₐₓ) des Hohlkörperabschnitts das 0,2- bis 1,0-fache beträgt.

5. Hüllkörper nach einem der Ansprüche 1 bis 4, **dadurch gekennzeichnet, dass** sich neben der Innenabmessung auch die Wandstärke des Hohlkörperabschnitts längs der Achse (2) ändert.

6. Hüllkörper nach einem der Ansprüche 1 bis 5, **dadurch gekennzeichnet, dass** neben den Mikrovaristoren als Füllstoff auch elektrisch leitfähige Partikel in das Polymer eingebettet sind.

7. Hüllkörper nach Anspruch 6, **dadurch gekennzeichnet, dass** die elektrisch leitfähigen Partikel auf die Mikrovaristoren aufgebracht sind.

8. Hüllkörper nach einem der Ansprüche 6 oder 7, **dadurch gekennzeichnet, dass** die im Füllstoff vorgesehenen, elektrisch leitfähigen Teilchen ca. 0,05 bis ca. 5 Volumenprozent des Füllstoffes ausmachen.

9. Hüllkörper nach einem der Ansprüche 1 bis 8, **dadurch gekennzeichnet, dass** auf der Innenfläche des Hohlkörperabschnitts des ersten Feldsteuerungselements (3) eine ringförmig ausgebildete Schicht (21) aus elektrisch leitfähigem Material aufgebracht oder integriert ist, welche sich in Richtung der Achse (2) lediglich über einen Teilabschnitt des ersten Feldsteuerungselements (3) erstreckt.

10. Hüllkörper nach einem der Ansprüche 1 bis 9, **dadurch gekennzeichnet, dass** das erste Feldsteuerungselement (3) in eine Innenfläche eines elastisch verformbaren Tragkörpers (4) aus Isoliermaterial eingeformt ist.

11. Hüllkörper nach Anspruch 10, **dadurch gekennzeichnet, dass** in den Tragkörper (4) mindestens ein das erste Feldsteuerungselement (3) umgebendes und von diesem durch eine elektrisch isolierende Schicht (19) getrenntes zweites Feldsteuerungselement (18) eingeformt ist.

12. Hüllkörper nach Anspruch 11, **dadurch gekennzeichnet, dass** das Material des zweiten Feldsteuerungselements (18) ein Polymer und einen in das Polymer eingebetteten und Mikrovaristoren und gegebenenfalls elektrisch leitfähige Partikel enthaltenden Füllstoff aufweist.

13. Hüllkörper nach einem der Ansprüche 11 oder 12, **dadurch gekennzeichnet, dass** die Mikrovaristoren des ersten (3) und/oder des zweiten Feldsteuerungselements (18) durch Sintern metalloxiddotierter Zinkoxidpartikel gebildet sind.

14. Hüllkörper nach einem der Ansprüche 12 oder 13, **dadurch gekennzeichnet, dass** das erste und das zweite Feldsteuerungselement durch Wahl unterschiedlicher Füllstoffe, Füllstoffkonzentrationen und/oder Sinterbedingungen hervorgerufene unterschiedliche elektrische Eigenschaften aufweisen.

15. Hüllkörper nach einem der Ansprüche 11 bis 14, **dadurch gekennzeichnet, dass** zwischen dem ersten und dem zweiten Feldsteuerungselement (3, 18) eine Schicht (20) aus elektrisch leitfähigem Material aufgebracht ist.

16. Hüllkörper nach Anspruch 15, **dadurch gekennzeichnet, dass** die Leitschicht (20) in elektrisch isolierender Weise in die Isolationsschicht (19) eingebettet ist.

17. Kabelelement, insbesondere Kabelendverschluss (5) oder Kabelmuffe, mit einem Kabelabschnitt (6), welcher einen auf Hochspannungspotential führbaren Kabelleiter (7), eine elektrisch leitfähige Kabelschirmung (8) und eine zwischen Kabelleiter (7) und Kabelschirmung (8) angeordnete Kabelisolation (9) umfasst, und mit einem auf dem Kabelabschnitt (6) angebrachten Hüllkörper (1) nach einem der vorhergehenden Ansprüche, **dadurch gekennzeichnet, dass** die Innenabmessung des ersten Feldsteuerungselementes (3) in einem eine Absetzkante (12) einer Beschichtung (11) der Kabelschirmung und einen ungeschirmten Bereich (14) der Kabelisolierung (9) umschliessenden ersten Abschnitt (15) stärker gedehnt ist als in einem sich daran anschliessenden und einen geschirmten Bereich (16) der Kabelisolierung (9) umfassenden zweiten Abschnitt (17).

18. Kabelelement nach Anspruch 17, **dadurch gekennzeichnet, dass** das erste Feldsteuerungselement (3) die Beschichtung (11) der Kabelschirmung (8, 11) und den Kabelleiter (7) miteinander verbindet.

19. Kabelelement nach Anspruch 17, **dadurch gekennzeichnet, dass** das erste Feldsteuerungselement (3) und ein gegenenfalls vorgesehenes, das erste Feldsteuerungselement (3) umgebendes zweites Feldsteuerungselement (18) in axialer Richtung über die Absetzkante (15) geführt und lediglich mit der Kabelschirmung (8) verbunden sind.

20. Kabelelement nach Anspruch 17, **dadurch gekennzeichnet, dass** in Abänderung von Anspruch 17 das gegebenenfalls vorgesehene zweite Feldsteuerungselement (18) auf floatendem Potential gehalten ist.

21. Kabelelement nach einem der Ansprüche 19 oder 20, **dadurch gekennzeichnet, dass** zwischen dem ersten (3) und dem gegebenenfalls vorgesehenen zweiten Feldsteuerungselement (18) eine elektrisch leitende Schicht (20) angeordnet ist, welche entweder in elektrisch isolierender Weise in eine die beiden Feldsteuerungselemente (3, 18) voneinander trennende Isolationsschicht (19) eingebettet oder mit dem zweiten Feldsteuerungselement (18) elektrisch leitend verbunden ist.

22. Kabelelement nach einem der Ansprüche 17 bis 21, **dadurch gekennzeichnet, dass** auf der Innenfläche des Hohlkörperabschnitts des ersten Feldsteuerungselements (3) eine ringförmig ausgebildete Schicht (21) aus elektrisch leitfähigem Material aufgebracht ist, welche sich in Richtung der Achse (2) über die Absetzkante (12) erstreckt.
